# EUROPEAN PATENT APPLICATION

(11) **EP 2 415 850 A1**
(43) Date of publication of application: **08.02.2012**
(21) Application number: 10761311.9
(22) Date of filing: 03.03.2010
(51) Int. Cl.: C10G 47/12

(54) **PRODUCTION METHOD FOR ALKYL BENZENES, AND CATALYST USED IN SAME**

(30) Priority: 30.03.2009 JP 2009082481; 14.09.2009 JP 2009211218
(71) Applicant: Japan Petroleum Energy Center, Minato-ku, Tokyo 105-0001 (JP); JX Nippon Oil & Energy Corporation, Chiyoda-ku Tokyo 100-8162 (JP)
(72) Inventor: MATSUSHITA, Koichi, Chiyodaku Tokyo 1008-162 (JP)
(74) Representative: Müller-Boré & Partner Patentanwälte
(86) International application number: PCT/JP2010/001451
(87) International publication number: WO 2010/116603

(57) **Abstract**

A method that efficiently produces an alkylbenzene with a high added value from a 1.5-cyclic aromatic hydrocarbon while suppressing excessive hydrocracking and nuclear hydrogenation, and preventing a decrease in catalytic activity due to deposition of carbon during a hydrocracking reaction, and a catalyst used therefor, are disclosed. A method of producing an alkylbenzene includes causing a hydrocarbon oil feedstock containing an alkylbenzene content of less than 20 vol%, a bicyclic aromatic hydrocarbon content of less than 30 vol%, and a 1.5-cyclic aromatic hydrocarbon content of 25 vol% or more to come in contact with a hydrocracking catalyst that includes a solid acid having a maximum acid strength of Brönsted acid of 110 kJ/mol or more and less than 140 kJ/mol.

## Description

### TECHNICAL FIELD

The invention relates to a method for efficiently producing an alkylbenzene with a high added value, and a catalyst used therefor, wherein the method allows a minimum naphthene ring-opening reaction to occur by causing an appropriate hydrocracking reaction without causing unnecessary nuclear hydrogenation.

### BACKGROUND ART

In the petroleum refining field, an alkylbenzene such as benzene, toluene, and xylene (BTX) has been produced by a catalytic reforming process. A catalytic reforming reaction basically does not cause a change in the number of carbon atoms of the feedstock. Attempts have been made to convert heavy oil having a large number of carbon atoms into light oil (e.g., gasoline fraction). A solid acid has been known as a catalyst for a cracking reaction that reduces the number of carbon atoms of the feedstock.

For example, Patent Literatures 1 and 2 disclose a method of upgrading a light cycle oil (LCO) using a catalyst that contains molybdenum and β zeolite or a group VIII or VI metal in the periodic table and ultrastable Y zeolite as the solid acid. However, this method aims at producing gasoline, and does not selectively produce BTX and the like. When separating BTX and the like as a product, the amount of alkylbenzene produced by this method is insufficient.
Patent Literatures 3, 4, and 5 disclose a method of producing a lubricant base oil or a middle distillate using a solid acid having specific acidity containing ultrastable Y zeolite, an amorphous cracking component, and a group VIII or VI metal in the periodic table. However, a method that efficiently produces an alkylbenzene from a 1.5-cyclic aromatic hydrocarbon that has one benzene ring and one naphthene ring has not been disclosed.

Patent Literature 6 discloses a method of producing a high-octane gasoline blending component by hydrocracking a petroleum hydrocarbon having an aromatic hydrocarbon content of 40 mass% or more using a catalyst obtained by causing a group VIII metal and a group VI metal in the periodic table having hydrogenation activity to be supported on crystalline aluminosilicate zeolite containing particles having particle diameters of 0.5 µm or less in an amount of 80 vol% or more. However, this method aims at producing a gasoline blending component, and does not selectively produce an alkylbenzene. Moreover, since the crystalline aluminosilicate zeolite having an MFI structure represented by the so-called ZSM-5 has a maximum acid strength as high as 140 kJ/mol or more, the yield of gasoline is less than 70 vol%, and the reaction liquid yield is low due to a high cracking rate.

The inventor of the invention proposed a method that selectively produces a monocyclic aromatic hydrocarbon by hydrocracking a polycyclic aromatic hydrocarbon in the presence of a zeolite catalyst (Patent Literature 7), and a method that produces an alkylbenzene by hydrocracking a refined oil obtained by refining a heavy hydrocarbon in the presence of a zeolite catalyst (Patent Literature 8). However, the method disclosed in Patent Literature 7 produces an alkylbenzene from an aromatic hydrocarbon having two or more rings (e.g., naphthalene rings). Since the hydrocracking catalyst used in Patent Literature 8 has a high maximum acid strength of Brönsted acid, only a small amount of alkylbenzene is produced. Therefore, an increase in the production amount of alkylbenzene has been desired.

### CITATION LIST

### PATENT LITERATURE

Patent Literature 1: WO1995/010579
Patent Literature 2: United States Patent No. 5,219,814
Patent Literature 3: JP-T-2006-505671
Patent Literature 4: JP-T-2006-505676
Patent Literature 5: Japanese Patent No. 4116617
Patent Literature 6: JP-A-2008-127541
Patent Literature 7: WO2007/135769
Patent Literature 8: JP-A-2008-297452

### SUMMARY OF INVENTION

### PROBLEMS TO BE SOLVED BY INVENTION

An object of the invention is to provide a method for producing an alkylbenzene with a high added value from a 1.5-cyclic aromatic hydrocarbon having one benzene ring and one naphthene ring in high yield with high conversion efficiency while suppressing excessive hydrocracking and nuclear hydrogenation, and preventing a decrease in catalytic activity due to deposition of carbon during a hydrocracking reaction, and a catalyst used therefor.

### MEANS FOR SOLVING THE PROBLEMS

The inventor conducted extensive studies in order to achieve the above object. As a result, the inventor found that the target ring-opening product can be selectively obtained by utilizing a hydrocracking catalyst that contains a solid acid (e.g., β zeolite) having an appropriate acid strength as compared with a solid acid having strong acidity (e.g., ZSM-5 or Y zeolite). The inventor also found that a 1.5-cyclic aromatic hydrocarbon can be converted into an alkylbenzene with a high conversion rate by utilizing zeolite having a small particle size because the number of acid centers on the outer surface of the solid acid per unit weight is determined by the particle size of zeolite, and the strength of the acid center can be adjusted by appropriately selecting zeolite. These findings have led to the completion of the invention.

Specifically, the present invention provides the following.
(1) A method of producing an alkylbenzene comprising causing a hydrocarbon oil feedstock containing an alkylbenzene content of less than 20 vol%, a bicyclic aromatic hydrocarbon content of less than 30 vol%, and a 1.5-cyclic aromatic hydrocarbon content of 25 vol% or more to come in contact with a hydrocracking catalyst that includes a solid acid having a maximum acid strength of a Brönsted acid of 110 kJ/mol or more and less than 140 kJ/mol.
(2) The method according to (1), wherein the solid acid is β zeolite particles having an average particle size of less than 0.7 µm.
(3) The method according to (2), wherein the β zeolite particles included in the hydrocracking catalyst have an average crystallite diameter of 50 nm or less.
(4) The method according to any one of (1) to (3), wherein the hydrocarbon oil feedstock is a fraction obtained by hydrogenating a hydrocarbon oil feedstock containing a bicyclic aromatic hydrocarbon content of 30 vol% or more so that the bicyclic aromatic hydrocarbon content is reduced to less than 30 vol%.

(5) A hydrocracking catalyst comprising a solid acid having a maximum acid strength of a Brönsted acid of 110 kJ/mol or more and less than 140 kJ/mol and being used for the method according to any one of (1) to (4).
(6) The hydrocracking catalyst according to (5), wherein the solid acid is β zeolite particles having an average particle size of less than 0.7 µm and an average crystallite diameter of 50 nm or less.

### ADVANTAGEOUS EFFECTS OF INVENTION

According to the invention, the ring-opening activity can be improved by utilizing a hydrocracking catalyst that includes a solid acid having moderate acidity such as zeolite having a small particle size and a large number of acid centers on the outer surface as active species, when producing an alkylbenzene (e.g., BTX) from a 1.5-cyclic aromatic hydrocarbon having one benzene ring and one naphthene ring, so that an alkylbenzene with a high added value can be produced at a high concentration under mild conditions. This makes it possible to suppress production of a carbonaceous substance deposited on the catalyst, so that the catalytic activity can be maintained for a long time.

### BRIEF DESCRIPTION OF DRAWINGS

FIG. 1 shows an SEM photograph of zeolite contained in the catalyst D used in the examples.
FIG. 2 shows an SEM photograph of zeolite contained in the catalyst E used in the examples.
FIG. 3 shows an SEM photograph of zeolite used in the catalyst D.
FIG. 4 shows an SEM photograph of zeolite used in the catalyst E.

### DESCRIPTION OF EMBODIMENTS

The term "alkylbenzene" used herein refers to a compound obtained by substituting hydrogen of benzene with 0 to 6 saturated hydrocarbon groups. A compound obtained by substituting hydrogen of benzene with a saturated hydrocarbon group is academically referred to as an alkylbenzene. The term "alkylbenzene" used herein also includes unsubstituted benzene. The saturated hydrocarbon group used to substitute hydrogen of benzene is generally a lower alkyl group having 1 to 4 carbon atoms. The term "1.5-cyclic aromatic hydrocarbon" used herein refers to a compound that includes one aromatic ring and one saturated naphthene ring in the molecule, such as tetralin (1,2,3,4-tetrahydronaphthalene), indan (2,3-dihydroindene), and cyclohexylbenzene. The term "1.5-cyclic aromatic hydrocarbon" used herein also includes a compound in which hydrogen of the aromatic ring and/or the naphthene ring is substituted with a hydrocarbon group. Tetralin and an alkyltetralin may be collectively referred to as tetralins, indan and an alkylindan may be collectively referred to as indans, and cyclohexylbenzene and an alkylcyclohexylbenzene may be collectively referred to as cyclohexylbenzenes. Note that the term "polycyclic aromatic hydrocarbon" used herein refers to a hydrocarbon that includes two or more aromatic rings (i.e., a fused ring or a plurality of bonded monocyclic rings). A hydrocarbon that includes two aromatic rings is referred to as a bicyclic aromatic hydrocarbon.

A method of producing an alkylbenzene according to one embodiment of the invention is described below in connection with a hydrocarbon oil feedstock, a pretreatment step, a hydrocracking reaction, a hydrocracking catalyst, a method of producing a hydrocracking catalyst, and a method of separating a hydrocracked oil.

Hydrocarbon oil feedstock
A hydrocarbon oil feedstock according to one embodiment of the invention has an alkylbenzene content of less than 20 vol%, preferably less than 15 vol%, and particularly preferably less than 10 vol%, a bicyclic aromatic hydrocarbon content of less than 30 vol%, preferably less than 25 vol%, and particularly preferably less than 20 vol%, and a 1.5-cyclic aromatic hydrocarbon content of 25 vol% or more, preferably 30 vol% or more, and particularly preferably 40 vol% or more.
If the hydrocarbon oil feedstock has an alkylbenzene content of 20 vol% or more, a bicyclic aromatic hydrocarbon content of 30 vol% or more, and a 1.5-cyclic aromatic hydrocarbon content of less than 25 vol%, the target alkylbenzene may not be obtained in high yield.

The hydrocarbon oil feedstock may be appropriately selected from a fraction obtained by atmospheric distillation of crude oil, a vacuum gas oil obtained by vacuum distillation of an atmospheric residue, a distillate obtained by a heavy oil cracking process (e.g., catalytic cracker or thermal cracker), such as a catalytically-cracked oil (particularly LCO) obtained from a catalytic cracker, and a thermally-cracked oil obtained from a thermal cracker (e.g., coker or visbreaker), an ethylene cracker heavy residue obtained from an ethylene cracker, a catalytic reformate obtained from a catalytic reformer, an aromatic-rich catalytic reformate obtained by subjecting a catalytic reformate to extraction, distillation, or membrane separation, a fraction obtained from an aromatic extractor that produces a lubricant base oil, an aromatic-rich fraction obtained from a solvent dewaxing unit, a fraction obtained by hydrotreating such a fraction, and the like so that the hydrocarbon oil feedstock has the above composition. Note that the expression "aromatic-rich" used herein means that the fraction is obtained from a catalytic reformer and contains more than 50 vol% of an aromatic compound having 10 or more carbon atoms. A distillate or the like obtained by a desulfurization process or a hydroconversion process (e.g., a heavy oil cracking process such as an H-Oil process or an OCR process, or a heavy oil cracking process using a supercritical fluid) that refines an atmospheric residue, a vacuum residue, a dewaxed oil, oil sand, oil shale, coal, biomass, or the like may also be used as the hydrocarbon oil feedstock as long as the hydrocarbon oil feedstock has the above composition.

A distillate obtained by appropriately combining a plurality of the above refining units may also be used as the hydrocarbon oil feedstock. These hydrocarbon oils may be used individually, or may be used in combination as long as the feedstock has an alkylbenzene content of less than 20 vol%, a bicyclic aromatic hydrocarbon content of less than 30 vol%, and a 1.5-cyclic aromatic hydrocarbon content of 25 vol% or more.
Among these hydrocarbon oil feedstocks, a catalytically-cracked oil, a thermally-cracked oil, a vacuum gas oil, an ethylene cracker heavy residue, a catalytic reformate, a oil obtained by cracking using a supercritical fluid, or a hydrotreated oil thereof is preferable, and a hydrotreated oil of a light cycle oil (LCO) is particularly preferable.

When the hydrocarbon oil feedstock has a bicyclic aromatic hydrocarbon content of 30 vol% or more, the hydrocarbon oil feedstock may be hydrogenated in advance so that the bicyclic aromatic hydrocarbon undergoes nuclear hydrogenation and is converted into a 1.5-cyclic aromatic hydrocarbon.
In this case, the hydrogenation treatment is not particularly limited, but is preferably performed by using a method described later in connection with the pretreatment step.

Tetralin and indan (i.e., 1.5-cyclic aromatic hydrocarbon) have a boiling point of 207°C and 176°C, respectively, and naphthalene (i.e., bicyclic aromatic hydrocarbon) has a boiling point of 218°C. It is preferable that the hydrocarbon oil feedstock has 10 vol% or less of a fraction having a boiling point of less than 175°C, and 90 vol% or more (more preferably 95 vol% or more) of a fraction having a boiling point of 170°C or more. Therefore, it is preferable that the hydrocarbon oil feedstock has a 10% distillation temperature of 100 to 175°C, more preferably 140 to 175°C, and still more preferably 150 to 170°C, and has a 90% distillation temperature of 230 to 600°C, more preferably 230 to 400°C, still more preferably 230 to 320°C, and particularly preferably 265 to 300°C.

In the case of using a petroleum fraction as the hydrocarbon oil feedstock, the petroleum fraction normally includes a nitrogen content of about 0.1 to about 0.3 wt% and a sulfur content of about 0.1 to about 3 wt% that is the reaction inhibitor of the hydrocracking reaction. The petroleum fraction includes benzothiophenes, dibenzothiophenes, and sulfides as the main sulfur compounds. However, in the boiling rang of the hydrocarbon oil feedstock used in the present invention there are many benzothiophenes and dibenzothiophenes. Since dibenzothiophene is stable due to electronically delocalization and is not easily hydrocracked, it is preferable that the hydrocarbon oil feedstock used in the present invention have a low dibenzothiophene content.

The sulfur content and the nitrogen content in the hydrocarbon oil feedstock can be reduced by the pretreatment described later. The sulfur content in the hydrocarbon oil feedstock is preferably to 500 wtppm or less, more preferably 100 wtppm or less, and particularly preferably 50 wtppm or less. The nitrogen content in the hydrocarbon oil feedstock is preferably to 50 wtppm or less, more preferably 20 wtppm or less, and particularly preferably 10 wtppm or less.

### Pretreatment step

In the present invention the various hydrocarbon oil feedstocks can be used as described above, but the sulfur compound content and the nitrogen compound content in them varies, too. If the sulfur compound content and the nitrogen compound content are too high, the hydrocracking catalyst may not fully exert its functions. Therefore, it is preferable to reduce the sulfur content and the nitrogen content in the hydrocarbon oil feedstock in advance by a known method as pretreatment step. Examples of the pretreatment step include hydrotreating, adsorption separation, sorption separation, oxidation, and the like. Among these, hydrotreating is preferable. In the case of a hydrotreating process, the hydrocracking feedstock is preferably caused to come in contact with a hydrotreating catalyst in the presence of hydrogen at a temperature of 150 to 400°C, more preferably 200 to 380°C, and still more preferably 250 to 360°C, a pressure of 1 to 10 MPa, and more preferably 2 to 8 MPa, a liquid hourly space velocity (LHSV) of 0.1 to 10.0 h⁻¹, more preferably 0.1 to 8.0 h⁻¹, and still more preferably 0.2 to 5.0 h⁻¹, and a hydrogen/hydrocarbon ratio of 100 to 5000 Nl/l, and more preferably 150 to 3000 Nl/l.

By the above-mentioned hydrotreating process, the sulfur content is preferably reduced to 500 wtppm or less, more preferably 100 wtppm or less, and particularly preferably 50 wtppm or less, and the nitrogen content is preferably reduced to 50 wtppm or less, more preferably 20 wtppm or less, and particularly preferably 10 wtppm or less. Note that the aromatic rings are also hydrogenated during desulfurization and denitrification due to the hydrotreating process. A reduction in the amount of polycyclic aromatic hydrocarbon poses no problem in the present invention. However, it is undesirable to reduce the amount of monocyclic aromatic hydrocarbon. Therefore, the reaction conditions are selected so that the polycyclic aromatic hydrocarbon is hydrogenated to a monocyclic or 1.5-cyclic aromatic hydrocarbon. To this end, it is preferable to control the reaction conditions so that the volume ratio of the total aromatic hydrocarbon content after the reaction to the total aromatic hydrocarbon content before the reaction is 0.90 or more, more preferably 0.95 or more, and still more preferably 0.98 or more.

The hydrotreating catalyst used for the pretreatment step is not particularly limited. It is preferable to use a catalyst that at least one metal selected from group 6 metals or group 8 metals in the periodic table is supported on the refractory oxide carrier. Specific examples of such a catalyst include a catalyst that at least one metal selected from molybdenum, tungsten, nickel, cobalt, platinum, palladium, iron, ruthenium, osmium, rhodium, and iridium as group 6 metals and group 8 metals in the periodic table is supported on at least one carrier selected from alumina, silica, boria, and zeolite. The hydrotreating catalyst may optionally be dried, reduced, or sulfurized in advance, for example. The hydrotreating catalyst is preferably used in the pretreatment step in an amount of 10 to 200 vol% based on the amount of the hydrocracking catalyst. If the amount of the hydrotreating catalyst is less than 10 vol%, sulfur may not be sufficiently removed. If the amount of the hydrotreating catalyst exceeds 200 vol%, a large apparatus may be required, and the process efficiency may decrease. The pretreatment step and the hydrocracking step may be performed using a single reactor provided with each catalyst bed, or may be performed using different reactors. A hydrogen feed line may be provided between the catalyst beds and a product gas discharge line may be provided upstream thereof so that the product gas can be removed and fresh hydrogen gas can be supplied in order to accelerate the reaction. The pretreatment step and the hydrocracking step may be performed using different units.

### Hydrocracking reaction

A method of hydrocracking a hydrocarbon oil feedstock according to one embodiment of the present invention includes causing the hydrocarbon oil feedstock to come in contact with a hydrocracking catalyst (described in detail later) in the presence of hydrogen to selectively produce an alkylbenzene from the hydrocarbon oil feedstock that includes a large amount of 1.5-cyclic aromatic hydrocarbon. Specifically, the naphthene ring of the hydrocarbon oil feedstock is opened to obtain an alkylbenzene and in addition, a hydrocracked oil that includes various light hydrocarbon fractions is obtained.

It is preferable that the alkylbenzene content in the hydrocracked oil obtained by the hydrocracking reaction be as high as possible. Specifically, it is preferable that the alkylbenzene content in the hydrocracked oil be higher than the alkylbenzene content in the hydrocarbon oil feedstock by 15 vol% or more, more preferably 17 vol% or more, and still more preferably 19 vol% or more. It is preferable that the BTX yield in the hydrocracked oil be higher than the BTX content in the hydrocarbon oil feedstock by 4 wt% or more, more preferably 5 wt% or more, and particularly preferably 6 wt% or more. Note that the term "BTX yield" refers to the total yield of benzene, toluene, and xylene included in the hydrocracked oil. The total content of 1.5-cyclic aromatic hydrocarbons such as tetralin and indan in the hydrocracked oil is 30 vol% or less, preferably 28 vol% or less, and particularly preferably 27 vol% or less. The total content of bicyclic or higher cyclic aromatic hydrocarbons in the hydrocracked oil is 1 vol% or less, preferably 0.5 vol% or less, and particularly preferably 0.3 vol% or less.

The yield (reaction liquid yield) of the hydrocracked oil is preferably 70 vol% or more, more preferably 75 vol% or more, and particularly preferably 80 vol% or more. If the reaction liquid yield is less than 70 vol% (i.e., the hydrocracking reaction has occurred to a large extent), the economic efficiency may decrease, and the catalyst may be inactivated due to carbon deposited on the catalyst during the hydrocracking reaction. Note that the term "reaction liquid yield" refers to the residual rate (vol%) of fractions having 5 or more carbon atoms after the reaction to the hydrocarbon oil feedstock. Since a large amount of gas is produced as a by-product during the hydrocracking reaction, the reaction liquid yield is normally less than 100 vol%. However, the reaction liquid yield may exceed 100 vol% when nuclear hydrogenation and selective hydrocracking that is not accompanied gas production preferentially occurs.

It is preferable that the 1.5-cyclic aromatic hydrocarbon conversion rate be as high as possible. However, since it is also important to suppress a significant decrease in reaction liquid yield, the 1.5-cyclic aromatic hydrocarbon conversion rate is preferably 35% or more, more preferably 40% or more, and particularly preferably 50% or more.
When the reaction liquid yield is high, but a ring-opening reaction does not occur even if hydrogenation occurs, the yield of an alkylbenzene does not increase. Therefore, the ratio of an increase (wt%) in the amount of an alkylbenzene to the conversion rate (%) of 1.5- or higher (mainly 1.5-cyclic and bicyclic) cyclic aromatic hydrocarbons is preferably 0.22 or more.

Note that the method of hydrocracking a hydrocarbon oil feedstock according to one embodiment of the invention is preferably designed so that the ratio "k(1RA)/k(O)" of a production rate constant k(1RA) of an alkylbenzene to a production rate constant k(O) of a compound other than an alkylbenzene is 0.80 or more, preferably 0.90 or more, and particularly preferably 1.00 or more. If the ratio "k(1RA)/k(O)" is less than 0.80,
a completely hydrogenated product (e.g., decalin and cyclohexane) and a cracked gas (e.g., butane and propane) may be produced preferentially over the target alkylbenzene, so that a ring-opening product may be produced to only a small extent.

Note that the production rate constant K(1RA) refers to the production rate constant of an alkylbenzene when the reaction is a first-order reaction, and the production rate constant k(O) refers to the production rate constant of a compound other than an alkylbenzene from tetralin when the reaction is a first-order reaction.

The hydrocarbon oil feedstock may be hydrocracked by an arbitrary method. A known reaction method such as fixed bed reaction, boiling bed reaction, fluidized bed reaction, or moving bed reaction may be used. Among these, a fixed bed reaction is preferable due to a simple unit configuration and the ease of operation.

The hydrocracking catalyst used in one embodiment of the present invention is preferably subjected to a pretreatment (e.g., drying, reduction, or sulfurization) after charging the reactor with the hydrocracking catalyst. The pretreatment may be performed by a well-known method inside or outside the reactor. The catalyst is normally activated via sulfurization by treating the hydrocracking catalyst with a stream of a hydrogen/hydrogen sulfide mixture at 150 to 800°C, and preferably 200 to 500°C.

The hydrocracking conditions (e.g., reaction temperature, reaction pressure, hydrogen flow rate, and liquid hourly space velocity) differ depending on the properties of the hydrocarbon oil feedstock, the quality of the hydrocracked oil, the production amount, and the capacity of refining plant, hydrocracking plant, and post-treatment plant, but may be relatively easily determined when the hydrocarbon oil feedstock, hydrocracking plant, and the like have been determined.

The hydrocarbon oil feedstock is normally caused to come in contact with the hydrocracking catalyst in the presence of hydrogen at a reaction temperature of 200 to 450°C, preferably 250 to 430°C, and more preferably 280 to 400°C, a reaction pressure of 2 to 10 MPa, and preferably 2 to 8 MPa, a liquid hourly space velocity (LHSV) of 0.1 to 10.0 h⁻¹, preferably 0.1 to 8.0 h⁻¹, and more preferably 0.2 to 5.0 h⁻¹, and a hydrogen/hydrocarbon ratio of 100 to 5000 Nl/l, and preferably 150 to 3000 Nl/l. The polycyclic aromatic hydrocarbon and the 1.5-cyclic aromatic hydrocarbon contained in the hydrocarbon oil feedstock are hydrocracked (decomposed), and converted into the desired alkylbenzenes by performing the operation under the above conditions. If the operation conditions are outside the above range, the hydrocracking activity may be insufficient, or the catalyst may deteriorate rapidly.

### Hydrocracking catalyst

The solid acid used in one embodiment of the present invention has a maximum acid strength of Brönsted acid of 110 kJ/mol or more and less than 140 kJ/mol, preferably 115 kJ/mol or more, and more preferably 120 kJ/mol or more. The maximum acid strength of Brönsted acid is preferably 135 kJ/mol or less. If the maximum acid strength of Brönsted acid is less than 110 kJ/mol, a ring-opening reaction may proceed to only a small extent since a sufficient acid center may not be obtained. If the maximum acid strength of Brönsted acid is 140 kJ/mol or more, a hydrocracking reaction including dealkylation reaction, nuclear hydrogenation reaction and so on may proceed to a large extent in addition to a ring-opening reaction, so that the reaction liquid yield may decrease. In either case, the yield of an alkylbenzene may decrease.

The maximum acid strength of Brönsted acid is determined as the heat of adsorption of ammonia. The maximum acid strength of Brönsted acid may be measured by an ammonia adsorption and temperature programmed desorption (NH₃-TPD) method and Fourier transform infrared spectroscopy (FT-IR) (see N. Katada, T. Tsubaki, M. Niwa, Appl. Cat. A: Gen., Vol. 340, 2008, p. 76, or N. Katada and M. Niwa, Zeolite, Vol. 21, 2004, p. 45). Specifically, the acidity is determined from the difference in absorption attributed to the deformation vibration (1430cm⁻¹) of the Brönsted acid at each temperature. A maximum acid strength distribution is determined from the temperature dependence on the assumption that the heat of adsorption of ammonia is constant. The strong acid-side peak of the Brönsted acid in the resulting distribution is read, and determined to be the maximum acid strength.

The Brönsted acid center of the solid acid has an important role in the hydrocracking reaction (particularly the ring-opening reaction) of the hydrocarbon oil feedstock in the present invention. The Brönsted acid center is present inside the pores and on the outer surface of the solid acid. It is preferable that the solid acid have a larger outer surface area taking account of the ease of access by the target molecules and clogging of the pores due to deposition of a carbonaceous substance that decreases the activity.
The outer surface area can be effectively increased by reducing the particle size of the solid acid. Therefore, it is preferable to use zeolite as the solid acid. The average particle size of the zeolite is preferably less than 0.7 µm, more preferably less than 0.6 µm, and still more preferably less than 0.5 µm. The average particle size of the zeolite is basically maintained after preparation of the catalyst.

When using zeolite having an average particle size of 0.7 µm or more, access by the target molecules may be hindered, and clogging may occur around the entrance of the pores of the catalyst due to deposition of a carbonaceous substance since the outer surface area is small, so that the life of the catalyst may decrease.
The average particle size of the zeolite is determined as follows. Specifically, the solid acid particles are photographed using a scanning electron microscope (hereinafter referred to as "SEM"), and the major axis and the minor axis of a randomly selected particles of twenty or more are measured. The average value of the major axis and the minor axis is determined to be the particle size of each zeolite particle, and the average particle size of these zeolite particles is determined to be the average particle size of the zeolite.

It is preferable to use β zeolite. Na type, H type, and NH₄ type of β zeolite are relatively easily available. Na type is normally obtained by synthesis, and converted into H type or NH₄ type via ion exchange.

The zeolite may preferably support one or more metals selected from transition metals such as iron, cobalt, nickel, molybdenum, tungsten, copper, zinc, chromium, titanium, vanadium, zirconia, cadmium, tin, and lead, and rare-earth elements such as lanthanum, cerium, ytterbium, europium, and dysprosium. The conventional supporting method is usable, for example, ions of such a metal may be introduced into the carrier by immersing the carrier in a solution that contains a salt of such a metal to obtain a transition metal-containing zeolite or a rare-earth element-containing zeolite. The transition metal-containing zeolite or the rare-earth element-containing zeolite may be used individually or in combination for the hydrocracking reaction (described later).

The hydrocracking catalyst may be formed in the shape of pellets (cylindrical pellets or irregular pillar-shaped pellets), granules, spheres, or the like using the solid acid, a binder that binds the solid acid, and the like.
The hydrocracking catalyst is preferably produced so that the solid acid having a small particle size is finely dispersed in the binder or the like. Therefore, it is preferable that the solid acid have a small crystallite diameter. When using zeolite as the solid acid, the average crystallite diameter of the zeolite is preferably 50 nm or less, more preferably 47 nm or less, and particularly preferably 45 nm or less.

An arbitrary crystal plane of the zeolite may be used to calculate the crystallite diameter as long as the crystal plane is clear and overlaps another crystal phase. The X-ray diffraction peaks of the (004) plane and the (008) plane of β zeolite are normally clear. Therefore, the crystallite diameter of zeolite or a zeolite-containing catalyst may be measured using an X-ray diffractometer (XRD). Specifically, the diffraction pattern is measured by powder X-ray diffractometry using Cu Kα-rays, and the full-width at half maximum is determined from the diffraction peaks at 2θ=13.4 to 13.5° or 27.0 to 27.1°. The crystallite diameter is calculated by Scherrer's equation (Scherrer constant: 0.9). The sample is exchanged with another sample, and the measured values are averaged to obtain the average crystallite diameter. Note that the crystallite diameter of ZSM-5 zeolite may be calculated using the average value of the values measured using the (101), (200), (002), (102), (202), (103), and (113) planes.
The crystallite diameter of the zeolite is basically maintained after preparation of the catalyst in the same manner as the average particle size.

The hydrocracking catalyst preferably has a specific surface area of 100 to 800 m²/g, a central pore diameter of 3 to 15 nm, and a pore volume of pores having a diameter of 2 to 60 nm of 0.1 to 1.0 ml/g.
The specific surface area is determined by nitrogen adsorption in accordance with ASTM D3663-78. The specific surface area of the hydrocracking catalyst is more preferably 150 to 700 m²/g, and still more preferably 200 to 600 m²/g. If the specific surface area of the hydrocracking catalyst is less than 100 m²/g, the activity of the hydrocracking catalyst may not be improved due to insufficient dispersion of the active metal. If the specific surface area of the hydrocracking catalyst exceeds 800 m²/g, a sufficient pore volume may not be maintained, so that the reaction product may not be sufficiently diffused. As a result, the reaction may be rapidly inhibited.

The central pore diameter of the hydrocracking catalyst is more preferably 3.5 to 12 nm, and still more preferably 4.0 to 10 nm.
The pore volume of pores having a pore diameter of 2 to 60 nm is more preferably 0.15 to 0.8 ml/g, and still more preferably 0.2 to 0.7 ml/g. An appropriate central pore diameter range and an appropriate pore volume range are determined taking account of the relationship between the size and the diffusion of molecules involved in the reaction.

The pore diameter and the pore volume of mesopores may be measured by a nitrogen gas absorption method, and the relationship between the pore volume and the pore diameter may be calculated by the BJH method or the like.
When the cumulative pore volume of pores having a pore diameter of 2 to 60 nm determined by the nitrogen gas adsorption method under a relative pressure of 0.9667 is referred to as V, the term "central pore diameter" refers to a pore diameter at which the cumulative pore volume is V/2 in a cumulative pore volume curve obtained by integrating the pore volume corresponding to each pore diameter.

It is preferable that the hydrocracking catalyst used in one embodiment of the present invention includes macropores, mesopores, and micropores. Since the mesopore characteristics of the solid acid are normally maintained until the catalyst is formed, the mesopore characteristics of the hydrocracking catalyst are preferably adjusted by controlling the kneading conditions (time, temperature, and torque) and the calcination conditions (time, temperature, and the type and flow rate of circulation gas) so that the solid acid has the above mesopore characteristics.

The macropore characteristics may be adjusted by controlling the space between the solid acid particles and the filling factor of a binder. The space between the solid acid particles may be controlled by adjusting the particle size of the solid acid particles, and the filling factor may be controlled by adjusting the amount of binder.
The micropore characteristics are mainly determined by the pores included in the solid acid, but may be controlled by a dealuminization treatment such as steaming or the like.
The mesopore characteristics and the macropore characteristics may be affected by the properties of the binder and the kneading conditions (described later). The solid acid is mixed with an inorganic oxide matrix (binder) to prepare a carrier.

It is preferable that the hydrocracking catalyst have high mechanical strength. For example, the hydrocracking catalyst formed in the shape of a cylindrical pellet having a diameter of 1.6 mm preferably has a side crushing strength of 3 kg or more, and more preferably 4 kg or more. When producing a catalyst by causing a metal component to be supported on the carrier via impregnation, it is preferable that the carrier also have sufficient mechanical strength in order to produce the catalyst in high yield. Specifically, the carrier formed in the shape of a cylindrical pellet having a diameter of 1.6 mm preferably has a side crushing strength of 3 kg or more, and more preferably 4 kg or more.
The bulk density of the catalyst is preferably 0.4 to 2.0 g/cm³, more preferably 0.5 to 1.5 g/cm³, and particularly preferably 0.6 to 1.2 g/cm³.

A porous and amorphous materialsuch as alumina, silica-alumina, titania-alumina, zirconia-alumina, or boria-alumina may preferably be used as the binder. Among these, alumina, silica-alumina, and boria-alumina are preferable due to a high zeolite binding capability and a large specific surface area. These inorganic oxides serve as a substance that supports an active metal, and also serve as a binder that binds zeolite and improves the strength of the catalyst. The specific surface area of the binder is preferably 30 m²/g or more.

It is preferable to use a powder of aluminum hydroxide and/or hydrated aluminum oxide (hereinafter may be referred to as "alumina powder"), particularly aluminum oxide monohydrate having a boehmite structure such as pseudo-boehmite (hereinafter may be referred to as "alumina"), as the binder which is one component of the carrier since the hydrocracking activity and the selectivity can be improved. It is also preferable to use a powder of boria (boron oxide)-containing aluminum hydroxide and/or hydrated aluminum oxide, particularly boria-containing aluminum oxide monohydrate having a boehmite structure such as pseudo-boehmite, as the binder since the hydrocracking activity and the selectivity can be improved.

A commercially available alumina source (e.g., PURAL (registered trademark), CATAPAL (registered trademark), DISPERAL (registered trademark), DISPAL (registered trademark) manufactured by SASOL Ltd., VERSAL (registered trademark) manufactured by UOP, or HIQ (registered trademark) manufactured by ALCOA Inc. may be used as the aluminum oxide monohydrate. Aluminum oxide monohydrate may be produced by a well-known method that partially dehydrates aluminum oxide trihydrate. When using aluminum oxide monohydrate in the form of a gel, the gel is deflocculated with water or acidic water. When synthesizing alumina by a precipitation method, aluminum chloride, aluminum sulfate, aluminum nitrate, or the like may be used as the acidic aluminum source, and sodium aluminate, potassium aluminate, or the like may be used as the basic aluminum source.

The binder is preferably used in an amount of 5 to 70 wt%, and more preferably 10 to 60 wt%, based on the total amount of the solid acid and the binder that form the catalyst. If the amount of the binder is less than 5 wt%, the mechanical strength of the catalyst may decrease. If the amount of the binder exceeds 70 wt%, the hydrocracking activity and the selectivity may relatively decrease.
The content of the solid acid is preferably 1 to 80 wt%, and more preferably 10 to 70 wt%, based on the total amount of the hydrocracking catalyst. If the content of the solid acid is less than 1 wt%, the effect of improving the hydrocracking activity due to the solid acid may be insufficient. If the content of the solid acid exceeds 80 wt%, the middle distillate selectivity may relatively decrease.

The hydrocracking catalyst according to one embodiment of the present invention preferably includes a metal selected from group 6 metals and group 8 metals in the periodic table as an active component. Among group 6 metals and group 8 metals, molybdenum, tungsten, iron, ruthenium, osmium, cobalt, rhodium, iridium, nickel, palladium, and platinum are preferably used. The metals may used either individually or in combination. These metals are preferably added so that the total content of group 6 metals and group 8 metals in the hydrocracking catalyst is 0.05 to 35 wt%, and particularly preferably 0.1 to 30 wt%. When using molybdenum, the molybdenum content in the hydrocracking catalyst is preferably 5 to 20 wt%, and particularly preferably 7 to 15 wt%. When using tungsten, the tungsten content in the hydrocracking catalyst is preferably 5 to 30 wt%, and particularly preferably 7 to 25 wt%. If the molybdenum content or the tungsten content is less than the above range, the hydrogenation function of the active metal required for the hydrocracking reaction may be insufficient. If the molybdenum content or the tungsten content exceeds the above range, the active metal component may aggregate.

When using molybdenum or tungsten, the hydrogenation function of the active metal is improved by adding cobalt or nickel. In this case, the total content of cobalt and nickel in the hydrocracking catalyst is preferably 0.5 to 10 wt%, and particularly preferably 1 to 7 wt%. When using one or more metals selected from rhodium, iridium, platinum, and palladium, the content of these metals is preferably 0.1 to 5 wt%, and particularly preferably 0.2 to 3 wt%. If the content of these metals is less than 0.1 wt%, a sufficient hydrogenation function may not be obtained. If the content of these metals exceeds 5 wt%, the economic efficiency may deteriorate due to the low adding efficiency.

The group 6 metal component that may be supported on the carrier as an active component may be added by impregnating the carrier with an aqueous solution of a compound such as ammonium paramolybdate, molybdic acid, ammonium molybdate, molybdophosphoric acid, ammonium tungstate, tungstic acid, anhydrous tungstic acid, or tungstophosphoric acid.

The group 8 metal component may be used as an aqueous solution of a nitrate, sulfate, chloride, fluoride, bromide, acetate, carbonate, or phosphate of nickel or cobalt, or an aqueous solution of chloroplatinic acid, dichlorotetraammine platinum, tetrachlorohexammine platinum, platinum chloride, platinum iodide, potassium chloroplatinate, palladium acetate, palladium chloride, palladium nitriate, palladium acetylacetonate, rhodium acetate, rhodium chloride, rhodium nitrate, ruthenium chloride, osmium chloride, iridium chloride, or the like. Phosphorus, boron, potassium, or a rare-earth element such as lanthanum, cerium, ytterbium, europium, or dysprosium may be added as an additional component.

### Method of producing hydrocracking catalyst

The hydrocracking catalyst according to one embodiment of the present invention may be produced by kneading and forming the solid acid and the binder, and drying and calcining the formed product to obtain a carrier, causing the metal component to be supported on the carrier via impregnation, and drying and calcining the resulting product. The method of producing the hydrocracking catalyst according to one embodiment of the present invention is described in detail below. Note that a method other than the following method that can produce a catalyst having given pore characteristics and given performance may also be used.

A kneader normally used to produce a catalyst may be used to knead the solid acid and the binder. It is preferable to add the raw materials, add water, and mix the components using a stirring blade. Note that the raw materials and the additives may be added in an arbitrary order, and other kneading conditions may be appropriately selected. Water is normally added when kneading the solid acid and the binder, but need not be added when the raw materials are in the form of a slurry. An organic solvent such as ethanol, isopropanol, acetone, methyl ethyl ketone, or methyl isobutyl ketone may be added in addition to, or instead of, water. The kneading temperature and the kneading time differ depending on the solid acid and the binder used as the raw materials. The kneading temperature and the kneading time may be appropriately selected as long as a preferable porous structure can be obtained. The raw materials may be kneaded together with an acid such as nitric acid, a base such as ammonia, an organic compound such as citric acid and ethylene glycol, a water-soluble polymer compound such as a cellulose ether and polyvinyl alcohol, ceramic fibers, or the like as long as the properties of the catalyst are maintained.

After kneading the raw materials, the kneaded product may be formed by a well-known method normally used when producing a catalyst. In particular, the kneaded product is preferably formed by extrusion using a screw extruder that can efficiently form the kneaded product into a desired shape (e.g., pellets (cylindrical pellets or irregular pillar-shaped pellets), granules, or spheres), or by an oil-dropping method that can efficiently form the kneaded product into spheres. The size of the formed product is not particularly limited. For example, it is easy to obtain cylindrical pellets having a diameter of about 0.5 to 20 mm and a length of about 0.5 to 15 mm.
The formed product thus obtained is dried and calcined to obtain a carrier. The formed product may be calcined at 300 to 900°C for 0.1 to 20 hours in a gaseous atmosphere (e.g., air or nitrogen).

The metal component may be supported on the carrier by an arbitrary method. An aqueous solution of an oxide or a salt (e.g., nitrate, acetate, carbonate, phosphate, or halide) of the desired metal may be provided, and the metal component may be supported on the carrier by spraying, impregnation (e.g., dipping), an ion-exchange method, or the like. A large amount of the metal component can be supported by repeating the supporting step and the drying step.

For example, the carrier is impregnated with an aqueous solution containing a group 6 metal component, dried at room temperature to 150°C, preferably 100 to 130°C, for 0.5 hours or more, or not to be dried, impregnated with an aqueous solution containing a group 8 metal component, dried at room temperature to 150°C, preferably 100 to 130°C, for 0.5 hours or more, and calcined at 350 to 800°C, preferably 450 to 600°C, for 0.5 hours or more to obtain a catalyst.
The group 6 metal or the group 8 metal supported on the carrier may be in the form of a metal, an oxide, a sulfide, or the like.

### Method of separating hydrocracked oil

A post-treatment step that refines the hydrocracked oil may optionally be provided. The post-treatment step is not particularly limited. The type and the amount of catalyst and the operating conditions may be set in the same manner as in the pretreatment step. The post-treatment step may be provided immediately after the hydrocracking step to treat the hydrocracked oil, or may be provided after the subsequent separation step to treat each hydrocarbon fraction obtained by the separation step. It is possible to significantly reduce the amount of impurities in the product by providing the post-treatment step. For example, the sulfur content and the nitrogen content can be reduced to 0.1 wtppm or less by providing the post-treatment step.

The resulting hydrocracked oil may be appropriately separated by the separation step into products such as an LPG fraction, a gasoline fraction, a kerosene fraction, a gas oil fraction, a non-aromatic naphtha fraction, and an alkylbenzene. These products may be used directly as LPG, gasoline, kerosene, gas oil, or a petrochemical raw material as long as the petroleum product specification and the like are satisfied, but are normally blended and refined as a base material. The separation process is not particularly limited. A known process such as precision distillation, adsorption separation, sorption separation, extraction separation, or membrane separation may be used depending on the desired properties of the product. The operating conditions of the separation process may be appropriately selected, too.

The distillation method separates the hydrocracked oil into an LPG fraction, a gasoline fraction, a kerosene fraction, and a gas oil fraction. Specifically, the hydrocracked oil is separated into an LPG fraction having a boiling point lower than about 0 to 30°C, a gasoline fraction having a boiling point higher than that of the LPG fraction and lower than about 150 to 215°C, a kerosene fraction having a boiling point higher than that of the gasoline fraction and lower than about 215 to 260°C, and a gas oil fraction having a boiling point higher than that of the kerosene fraction and lower than about 260 to 370°C. A fraction heavier than the gas oil fraction may be recycled to the hydrocracking process as unreacted fraction, or may be used as a base material for A-type fuel oil and the like.

Examples of the hydrocarbon product include an LPG fraction having a boiling point of -10 to 30°C, a gasoline fraction having a boiling point of 30 to 215°C, and a kerosene/gas oil fraction that remains after separating the LPG fraction and the gasoline fraction and containing a large amount of alkylbenzene.

### EXAMPLES

The method of producing a hydrocarbon fraction according to one embodiment of the present invention is further described below by way of examples and comparative examples. Note that the invention is not limited to the following examples.
In the examples and comparative examples, the properties of the feedstock and the hydrocracked oil were analyzed by the following method, and the properties of the catalyst were measured by the following methods using the following instruments.

### Analysis of properties

The density was measured in accordance with JIS K 2249 (vibration type density test method), and the distillation characteristics were measured in accordance with JIS K 2254 (atmospheric distillation test method).
The composition of the alkylbenzene (benzene, toluene, and xylene) and the 1.5-cyclic aromatic hydrocarbon (e.g., tetralin) were measured using a hydrocarbon component analyzer (manufactured by Shimadzu Corporation) in accordance with JIS K 2536.
The aromatic compound type analysis (ring analysis) was performed using a high-performance liquid chromatography system in accordance with JPI-5S-49-97 specified by the Japan Petroleum Institute (mobile phase: n-hexane, detector: RI detector).
The sulfur content was measured in accordance with JIS K 2541 (sulfur content test method). A fluorescent X-ray method was applied to a high-concentration region, and oxidative microcoulometry method was applied to a low-concentration region.
The nitrogen content was measured in accordance with JIS K 2609 (chemiluminescent method).

### Maximum acid strength of Brönsted acid of zeolite

About 10 mg of the sample was compression-formed in the shape of a disk having a diameter of 10 mm. The sample was placed in an in-situ infrared cell, heated under an oxygen pressure of 40 kPa (300 Torr), held at 500°C for 1 hour, degassed at 500°C for 15 minutes under vacuum, and cooled to 100°C under vacuum. The inside of the system was maintained at 3.33 kPa (25Torr) by flowing He at 82 µmol/sec (120 cm³/min under normal conditions), and heated to 500°C at 10°C/min. The IR spectrum was measured during heating at intervals of 10°C. After introducing ammonia (133 kPa) at 100°C, the system was maintained for 30 minutes. After degassing the system for 30 minutes, He was flowed at 82 µmol/sec, the IR spectrum and the MS spectrum were measured. A certain amount of ammonia was then supplied to the mass spectrometer to correct the MS spectrum. The acid content of the Brönsted acid (1430 cm⁻¹) and the Lewis acid (1330 cm⁻¹) was measured by the deformation vibration of ammonia, the acid strength distribution was determined from the temperature dependence of ammonia desorbed from each acid center, and the strong acid-side peak of the Brönsted acid was read and determined to be the maximum acid strength.

### Measurement of pore characteristics

The pore characteristics (i.e., the specific surface area, the pore volume of pores having a pore diameter of 2 nm or more and less than 60 nm, and the central pore diameter) were measured by a nitrogen gas adsorption method using a system "ASAP 2400" manufactured by Micromeritics.

### Measurement of particle size of zeolite and zeolite-containing catalyst

The sample was secured on a high-temperature sample stage of an SEM ("S-5000" manufactured by Hitachi Ltd.) using an AG paste, and the SEM photograph was obtained at a sample temperature of 600°C and an accelerating voltage of 3 kV. The major axis and the minor axis of twenty particles randomly selected from the resulting SEM photograph were measured. The average value of the major axis and the minor axis was determined to be the particle size of each zeolite particle, and the average particle size of these zeolite particles was calculated.

### Measurement of crystallite diameter of zeolite and zeolite-containing catalyst

The crystallite diameter of the sample was measured using an X-ray diffractometer ("Ultima IV type" manufactured by Rigaku Corporation) under X-ray source: Cu kα1 (λ=0.15407 nm), tube voltage: 30 kV, tube current: 20 kA, scan speed: 4°C/min, step width: 0.02°, measurement range: 5 to 50°, and slit/divergence=2/3°. The average crystallite diameter was calculated from the half-width of the peak corresponding to the full-width at half maximum using the diffraction peak at 2θ=13.4 to 13.5° and 27.0 to 27.1°.

### Examples 1 to 4

1400 g of H-β type zeolite ("HSZ-940HOA" manufactured by Tosoh Corporation) having SiO₂/Al₂O₃ molar ratio of 39.6 and specific surface area of 746 m²/g was mixed with 834 g of an alumina powder ("Versal 250" manufactured by USP). After the addition of 500 ml of a 4.0 wt% diluted nitric acid solution and 100 g of ion-exchanged water, the mixture was kneaded, extruded into a cylindrical shape (pellets), dried at 130°C for 6 hours, and calcined at 600°C for 2 hours to obtain a carrier. The zeolite content and the alumina content in the carrier were 70 wt% and 30 wt%, respectively (when dried at 130°C).
The zeolite was subjected to ammonia TPD measurement. The maximum acid strength determined by the heat of adsorption of ammonia was 125 kJ/mol.

The carrier was spray-impregnated with an ammonium molybdate aqueous solution, dried at 130°C for 6 hours, spray-impregnated with a nickel nitrate aqueous solution, dried at 130°C for 6 hours and then calcined at 500°C for 30 minutes in an air stream to obtain a catalyst A. The composition (supported metal content) and the typical properties of the catalyst A are shown in Table 1.
The pore characteristics of the catalyst A were measured by a nitrogen gas adsorption method. The specific surface area was 359 m²/g, the pore volume of pores having a pore diameter of 2 nm or more and less than 60 nm was 0.312 ml/g, and the central pore diameter was 4.1 nm.

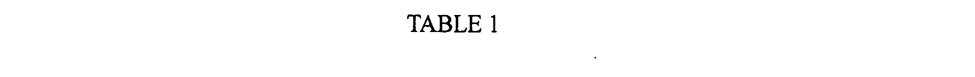

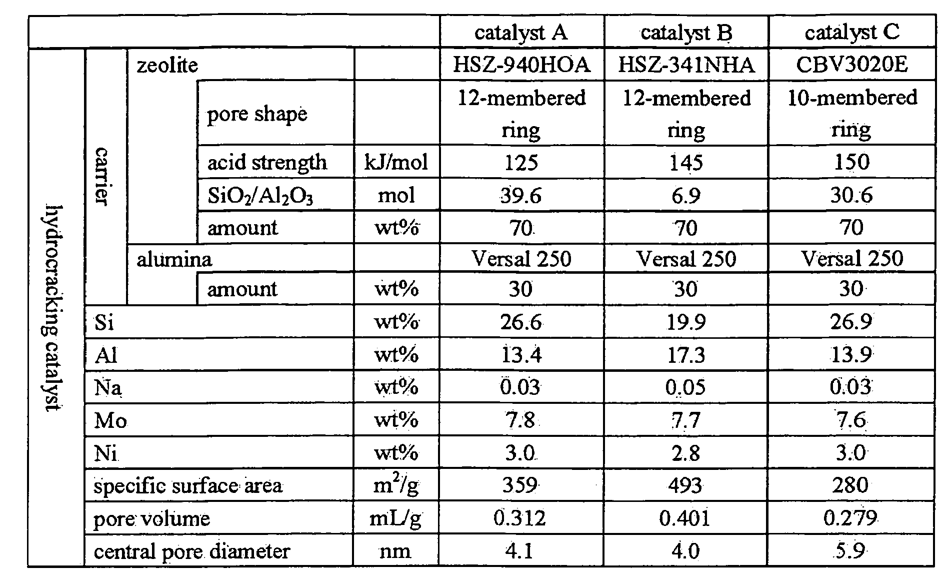

A mixture feedstock (sulfur content: less than 1 wtppm, nitrogen content: less than 1 wtppm) of tetralin of 44 vol% and n-dodecane of 56 vol% was hydrocracked under reaction pressure of 3.0 MPa, LHSV of 1.0 h⁻¹, hydrogen/feedstock oil ratio of 1365 Nl/l, reaction temperature of 280 to 350°C as shown in Table 2. The properties of the hydrocracked oil are shown in Table 2.
Note that the reaction liquid yield refers to the residual rate (vol%) of fractions having 5 or more carbon atoms after the reaction, and the 1.5- or higher cyclic aromatic hydrocarbon conversion rate is calculated by the following expression (hereinafter the same).
1.5- or higher cyclic aromatic hydrocarbon conversion rate (%) = 100 - (1.5-or higher cyclic aromatic hydrocarbon content (vol%) in hydrocracked oil / 1.5- or higher cyclic aromatic hydrocarbon content (vol%) in feedstock) × 100

**TABLE 2**

| | | | | Example 1 | Example 2 | Example 3 | Example 4 |
|---|---|---|---|---|---|---|---|
| hydrocracking catalyst | | | | catalyst A | catalyst A | catalyst A | catalyst A |
| reaction temperature | | | °C | 280 | 300 | 320 | 350 |
| reaction pressure | | | MPa | 3.0 | 3.0 | 3.0 | 3.0 |
| LHSV | | | h⁻¹ | 1.0 | 1.0. | 1.0 | 1.0 |
| hydrogen/feedstock | | | NL/L | 1365 | 1365 | 1365 | 1365 |
| reaction liquid yield | | | vol% | 107 | 104 | 93 | 72 |
| 1.5- or higher cyclic aromatic hydrocarbon conversion rate | | | % | 0.7 | 8.9 | 55.0 | 96.1 |
| alkylbenzene | | | wt% | 0.7 | 4.0 | 21.0 | 27.7 |
| | benzene | | wt% | 0.1 | 0.9 | 4.9 | 10.8 |
| | toluene | | wt% | 0 | 0 | 0.6 | 6.9 |
| | xylehe wt% | | | 0 | 0 | 0 | 1.1 |
| | | ortho | wt% | 0 | 0 | 0 | 0.3 |
| | | meta. | wt% | 0 | 0 | 0 | 0.8 |
| | | para | wt% | 0 | 0 | 0 | 0 |
| | ethylbenzene | | wt% | 0 | 0.1 | 1.0 | 5.5 |
| 1.5-cyclic aromatic hydrocarbon | | | wt% | 43.7 | 40.1 | 19.8 | 1.7 |
| bicyclic aromatic hydrocarbon | | | wt% | 0 | 0 | 0.1 | 0 |
| tricyclic or higher aromatic hydrocarbon | | | wt% | 0 | 0 | 0 | 0 |
| saturated cyclic hydrocarbon | | | wt% | 0.8 | 0.9 | 1.5 | 0.9 |
| | C6∼C9 naphthene | | wt% | 0.1 | 0.3 | 1.4 | 0.9 |
| | decalin | | wt% | 0.7 | 0.6 | 0.1 | 0 |
| k(1RA). | | | - | 0.016 | 0.095 | 0.64 | 0.98 |
| k(O) | | | - | 0.015 | 0.079 | 0.26 | 0.45 |
| k(1RA)/k(O) | | | - | 1.07 | 1.20 | 2.46 | 2.18 |
| alkylbenzene/ 1.5- or higher cyclic aromatic hydrocarbon conversion rate | | | - | 1 | 0.45 | 0.38 | 0.29 |

### Comparative Examples 1 to 4

A catalyst B was obtained in the same manner as the catalyst A, except for using 1684 g of NH₄-Y zeolite ("HSZ-341NHA" manufactured by Tosoh Corporation) having SiO₂/Al₂O₃ molar ratio of 6.9 and specific surface area of 697 m²/g, 834 g of an alumina powder ("Versal 250" manufactured by UOP), 500 ml of a 4.0 wt% diluted nitric acid solution, and 50 g of ion-exchanged water. The properties of the catalyst B are shown in Table 1.
The zeolite was subjected to ammonia TPD measurement. The maximum acid strength of Brönsted acid determined by the heat of adsorption of ammonia was 145 kJ/mol.

The feedstock was hydrocracked in the same manner as in Examples 1 to 4, except that the catalyst B was used instead of the catalyst A as shown in Table 3. The properties of the hydrocracked oil and the like are shown in Table 3.

**TABLE 3**

| | | | | Comparative Example 1 | Comparative Example 2 | Comparative Example 3 | Comparative Example 4 |
|---|---|---|---|---|---|---|---|
| hydrocracking catalyst | | | | catalyst B | catalyst B | catalyst B | catalyst B |
| reaction temperature | | | °C | 280 | 300 | 320 | 350 |
| reaction pressure | | | MPa | 3.0 | 3.0 | 3.0 | 3.0 |
| LHSV | | | h⁻¹ | 1.0 | 1.0 | 1.0 | 1.0 |
| hydrogen/feedstock | | | NL/L | 1365 | 1365 | 1365 | 1365 |
| reaction liquid yield | | | vol% | 102 | 107 | 105 | 99 |
| 1.5- or higher cyclic aromatic hydrocarbon conversion rate | | | % | 22.7 | 27.0 | 36.8 | 48.4 |
| alkylbenzene | | | wt% | 1.5 | 2.6 | 4.5 | 10.2 |
| | benzene | | wt% | 0.5 | 0.6 | 0.8 | 2.4 |
| | toluene | | wt% | 0 | 0.1 | 0.2 | 1.2 |
| | xylene | | wt% | 0 | 0 | 0 | 0.4 |
| | | ortho | wt% | 0 | 0 | 0 | 0.1 |
| | | meta | wt% | 0 | 0 | 0 | 0.2 |
| | | para | wt% | 0 | 0 | 0 | 0.1 |
| | ethylbenzene | | wt% | 0 | 0 | 0.1 | 0.3 |
| 1.5-cyclic aromatic hydrocarbon | | | wt% | 34.6 | 32.1 | 29.5 | 22.7 |
| bicyclic aromatic hydrocarbon | | | wt% | 0 | 0 | 0 | 0 |
| tricyclic or higher aromatic hydrocarbon | | | wt% | 0 | 0 | 0 | 0 |
| saturated cyclic.hydrocarbon | | | wt% | 2.3 | 2.5 | 2.2 | 1.4 |
| | naphthene | | wt% | 0.1 | 0.3 | 0.6 | 0.8 |
| | C6∼C9 decalin | | wt% | 2.2 | 2.2 | 1.6 | 0.6 |
| k(1RA) | | | - | 0.034 | 0.061 | 0.11 | 0.26 |
| k(O) | | | - | 0:22 | 0.27 | 0.32 | 0.47 |
| k(1RA)/k(O) | | | - | 0.15 | 0.23 | 0.34 | 0.55 |
| alkylbenzene/ / 1.5- or higher cyclic aromatic hydrocarbon conversion rate | | | - | 0.07 | 0.10 | 0.12 | 0.21 |

### Comparative Examples 5 to 8

A catalyst C was obtained in the same manner as the catalyst A, except for using 1533 g of NH₄-ZSM-5 type zeolite ("CBV3020E" manufactured by Zeolyst) having SiO₂/Al₂O₃ molar ratio of 30.6 and specific surface area of 400 m²/g, 834 g of an alumina powder ("Versal 250" manufactured by UOP), 500 ml of a 4.0 wt% diluted nitric acid solution, and 100 g of ion-exchanged water. The properties of the catalyst C are shown in Table 1.
The zeolite was subjected to ammonia TPD measurement. The maximum acid strength determined by the heat of adsorption of ammonia was 150 kJ/mol.

The feedstock was hydrocracked in the same manner as in Examples 1 to 4, except that the catalyst C was used instead of the catalyst A as shown in Table 4. The properties of the hydrocracked oil and the like are shown in Table 4.

**TABLE 4**

| | | | | Comparative Example 5 | Comparative Example 6 | Comparative Example 7 | Comparative Example 8 |
|---|---|---|---|---|---|---|---|
| hydrocracking catalyst | | | | catalyst C | catalyst C | catalyst C | catalyst C |
| reaction temperature | | | °C | 280 | 300 | 320 | 350 |
| reaction pressure | | | MPa | 3.0 | 3.0 | 3.0 | 3.0 |
| LHSV | | | h⁻¹ | 1.0 | 1.0 | 1.0 | 1.0 |
| hydrogen/feedstock | | | NL/L | 1365 | 1365 | 1365 | 1365 |
| reaction liquid yield | | | vol% | 65 | 56 | 44 | 36 |
| 1.5- or higher cyclic aromatic hydrocarbon conversion rate | | | % | 47.5 | 63.9 | 97.5 | 99.3 |
| alkylbenzene | | | wt% | 5.6 | 15.5 | 23.5 | 28.2 |
| | benzene | | wt% | 1.9 | 5.8 | 9.4 | 11.0 |
| | toluene | | wt% | 0.7 | 3.6 | 7.4 | 11.3 |
| | xylene | | wt% | 0 | 1.5 | 3.1 | 4.6 |
| | | ortho | wt% | 0 | 0.3 | 0.6 | 1.0 |
| | | meta | wt% | 0 | 0.8 | 1.7 | 2.5 |
| | | para | wt% | 0 | 0.4 | 0.8 | 1.1 |
| | ethylbenzene | | wt% | 0.4 | 1.1 | 1.1 | 0.4 |
| 1.5-cyclic aromatic hydrocarbon | | | wt% | 23.1 | 15.9 | 1.1 | 0.3 |
| bicyclic aromatic hydrocarbon | | | wt% | 0 | 0 | 0 | 0 |
| tricyclic or higher aromatic hydrocarbon | | | wt% | 0 | 0 | 0 | 0 |
| saturated cyclic hydrocarbon | | | wt% | 0.3 | 0.3 | 0 | 0 |
| | C6∼C9 naphthene | | wt% | 0.2 | 0.1 | 0 | 0 |
| | decalin | | wt% | 0.1 | 0.2 | 0 | 0 |
| k(1RA) | | | - | 0.16 | 0.43 | 0.68 | 1.0 |
| k(O) | | | - | 0.45 | 0.45 | 0.71 | 0.45 |
| k(1RA)/k(O) | | | - | 0.36 | 0.96 | 0.96 | 2.22 |
| alkylbenzene / 1.5- or higher cyclic aromatic hydrocarbon conversion rate | | | - | 0.12 | 0.24 | 0.24 | 0.28 |

As shown in Tables 2 to 4, the 1.5-cyclic aromatic hydrocarbon was efficiently converted into the desired alkylbenzene by hydrocracking the feedstock using a hydrocracking catalyst having an appropriate maximum acid strength as shown Examples 1 to 4. When using a known hydrocracking catalyst (Comparative Examples 1 to 4), an undesired hydrocracking reaction occurred to a large extent, so that the ratio "k(1RA)/k(O)" decreased. When using a hydrocracking catalyst having high hydrocracking activity (Comparative Examples 5 to 8), the yield of an alkylbenzene was high, but the reaction liquid yield was low due to excess hydrocracking reactions.

### Examples 5 to 8

### Preparation of hydrocracking catalyst

H-β type zeolite ("Lot-081106H" manufactured by N.E. CHEMCAT CORPORATION) having SiO₂/Al₂O₃ molar ratio of 31.3 and specific surface area of 706 m²/g) was used. The average particle size of the zeolite calculated from the SEM photograph was 0.3 µm. 1202 g of the zeolite was mixed with 1202 g of an alumina powder ("Versal 250" manufactured by UOP). After the addition of 500 ml of a 4.0 wt% diluted nitric acid solution and 875 g of ion-exchanged water, the mixture was extruded into cylindrical pellets, dried at 130°C for 6 hours, and calcined at 600°C for 2 hours to obtain a carrier. The zeolite content and the alumina content in the carrier were 50 wt% and 50 wt%, respectively (when dried at 130°C).
The carrier was spray-impregnated with an ammonium molybdate aqueous solution, dried at 130°C for 6 hours, spray-impregnated with a nickel nitrate aqueous solution, and dried at 130°C for 6 hours. The impregnated carrier was then calcined at 500°C for 30 minutes in an air stream to obtain a catalyst D. The composition (supported metal content) and the typical properties of the catalyst D are shown in Table 5.

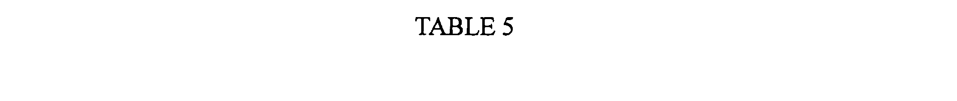

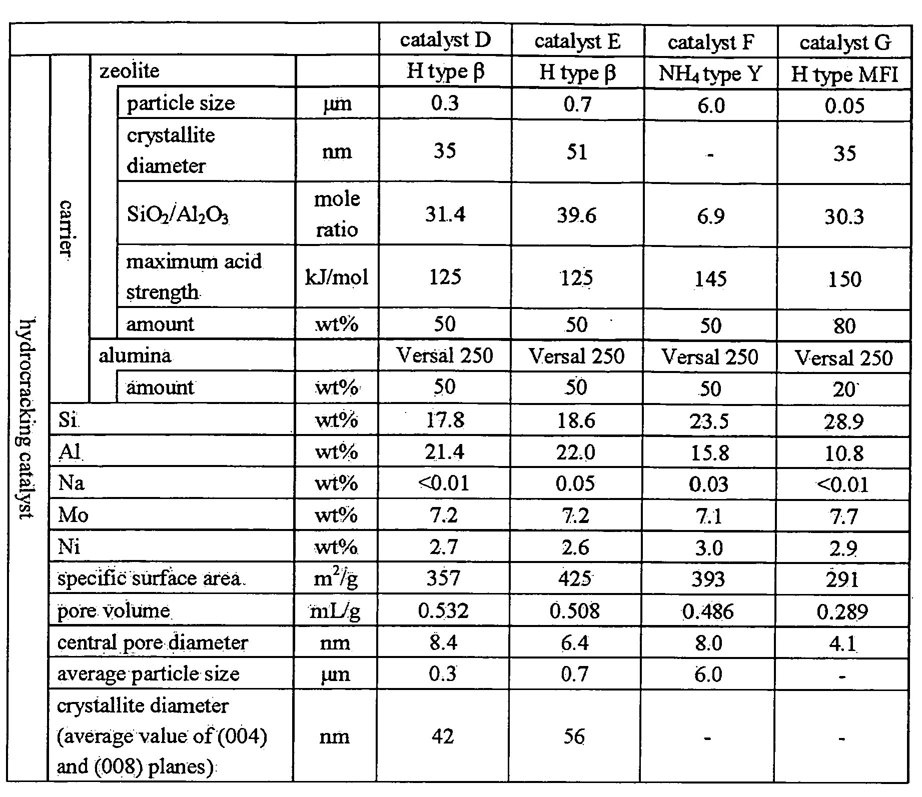

A mixture feedstock (sulfur content: less than 1 wtppm, nitrogen content: less than 1 wtppm) of tetralin of 44 vol%) and n-dodecane of 56 vol% was hydrocracked using the catalyst D under reaction pressure of 3.0 MPa, LHSV of 0.5 to 1.5 h⁻¹, hydrogen/feedstock oil ratio of 1365 Nl/l, reaction temperature of 300 to 320°C as shown in Table 6. The reaction conditions and the properties of the hydrocracked oil are shown in Table 6.

**TABLE 6**

| | | | | Example 5 | Example 6 | Example 7 | Example 8 |
|---|---|---|---|---|---|---|---|
| hydrocracking catalyst | | | | catalyst D | catalyst D | catalyst D | catalyst D |
| reaction temperature | | | °C | 300 | 300 | 320 | 320 |
| reaction pressure | | | MPa | 3.0 | 3.0 | 3.0 | 3.0 |
| LHSV | | | h⁻¹ | 0.5 | 1.0 | 1.0 | 1.5 |
| hydrogen/feedstock | | | NL/L | 1365 | 1365 | 1365 | 1365 |
| reaction liquid yield | | | vol% | 84 | 98 | 85 | 92 |
| 1.5- or higher cyclic aromatic hydrocarbon conversion rate | | | % | 97.3 | 39.9 | 88.6 | 60.2 |
| alkylbenzene | | | wt% | 22.1 | 22.8 | 19.6 | 22.8 |
| | BTX | | wt% | 13.4 | 6.4 | 11.7 | 6.9 |
| | | benzene | wt% | 11.4 | 6.0 | 10.0 | 6.8 |
| | | toluene | wt% | 2.0 | 0.4 | 1.8 | 0.1 |
| | | xylene | wt% | 0 | 0 | 0 | 0 |
| | ethylbenzene | | wt% | 2.4 | 0.7 | 2.1 | 1.3 |
| 1.5-cyclic aromatic hydrocarbon | | | wt% | 1.2 | 26.4 | 5.0 | 17.5 |
| | | | wt% | 0 | 18.6 | 3.3 | 9.5 |
| | tetralin others | | wt% | 1.2 | 7.8 | 1.7 | 8.0 |
| bicyclic aromatic hydrocarbon | | | wt% | 0 | 0 | 0 | 0.1 |
| tricyclic or higher aromatic hydrocarbon | | | wt% | 0 | 0 | 0 | 0 |
| saturated cyclic hydrocarbon | | | wt% | 1.9 | 1.4 | 1.2 | 1.1 |
| | C6∼C9 naphthene | | wt% | 1.9 | 1.3 | 1.2 | 1.0 |
| | decalin | | wt% | 0 | 0.1 | 0 | 0.1 |
| alkylbenzene/1.5- or higher cyclic aromatic hydrocarbon conversion rate | | | - | 0.23 | 0.57 | 0.22 | 0.38 |

### Examples 9 to 11

A catalyst E was obtained in the same manner as the catalyst D, except for using H-β type zeolite ("HSZ-940HOA" manufactured by Tosoh Corporation) having SiO₂/Al₂O₃ molar ratio of 39.6, specific surface area of 746 m²/g and particle size of 0.7 µm. The properties of the catalyst E are shown in Table 5.
The feedstock was hydrocracked in the same manner as in Examples 6 to 8, except that the catalyst E was used instead of the catalyst D as shown in Table 7. The properties of the hydrocracked oil and the like are shown in Table 7.

**TABLE 7**

| | | | | Example 9 | Example 10 | Example 11 |
|---|---|---|---|---|---|---|
| hydrocracking catalyst | | | | catalyst E | catalyst E | catalyst E |
| reaction temperature | | | °C | 300 | 320 | 320 |
| reaction pressure | | | MPa | 3.0 | 3.0 | 3.0 |
| LHSV | | | h⁻¹ | 1.0 | 1.0 | 1.5 |
| hydrogen/feedstock | | | NL/L | 1365 | 1365 | 1365 |
| reaction liquid yield | | | vol% | 106 | 100 | 103 |
| 1.5- or higher cyclic aromatic hydrocarbon conversion rate | | | % | 6.7 | 23.8 | 12.7 |
| alkylbenzene | | | wt% | 4.4 | 14.4 | 9.2 |
| | BTX | | wt% | 0.6 | 2.5 | 1.3 |
| | | benzene | wt% | 0.6 | 2.4 | 1.2 |
| | | toluene | wt% | 0 | 0.1 | 0.1 |
| | | xylene | wt% | 0 | 0 | 0 |
| | ethylbenzene | | wt% | 0 | 0.3 | 0.1 |
| 1.5-cyclic aromatic hydrocarbon | | | wt% | 41.0 | 33.5 | 38.4 |
| | tetralin | | wt% | 38.9 | 28.3 | 35.1 |
| | others | | wt% | 2.1 | 5.2 | 3.3 |
| bicyclic aromatic hydrocarbon | | | wt% | 0 | 0 | 0 |
| tricyclic or higher aromatic hydrocarbon | | | wt% | 0 | 0 | 0 |
| saturated cyclic hydrocarbon | | | wt% | 0.4 | 1.6 | 0.9 |
| | C6∼C9 naphthene | | wt% | 0.4 | 1.6 | 0.9 |
| | decalin | | wt% | 0 | 0 | 0 |
| alkylbenzene / 1.5- or higher cyclic aromatic hydrocarbon conversion rate | | | - | 0.66 | 0.61 | 0.73 |

### Comparative Examples 9 to 12

A catalyst F was obtained in the same manner as the catalyst D, except for using NH₄-Y type zeolite ("HSZ-341NHA" manufactured by Tosoh Corporation) having SiO₂/Al₂O₃ molar ratio of 6.9, specific surface area of 697 m²/g and particle size of 6.0 µm. The properties of the catalyst F are shown in Table 5.
The feedstock was hydrocracked in the same manner as in Example 6, except that the catalyst F was used instead of the catalyst D, and the reaction temperature was changed to 280 to 350°C as shown in Table 8. The properties of the hydrocracked oil and the like are shown in Table 8.

**TABLE 8**

| | | | | Comparative Example 9 | Comparative Example 10 | Comparative Example 11 | Comparative Example 12 |
|---|---|---|---|---|---|---|---|
| hydrocracking catalyst | | | | catalyst F | catalyst F | catalyst F | catalyst F |
| reaction temperature | | | °C | 280 | 300 | 320 | 350 |
| reaction pressure | | | MPa | 3.0 | 3.0 | 3.0 | 3.0 |
| LHSV | | | h⁻¹ | 1.0 | 1.0 | 1.0 | 1.0 |
| hydrogen/feedstock | | | NL/L | 1365 | 1365 | 1365 | 1365 |
| reaction liquid yield | | | vol% | 107 | 108 | 108 | 106 |
| 1.5- or higher cyclic aromatic hydrocarbon conversion rate | | | % | 13.6 | 19.0 | 30.0 | 50.9 |
| alkylbenzene | | | wt% | 1.5 | 2.6 | 4.5 | 11.0 |
| | BTX | | wt% | 0.5 | 0.6 | 0.9 | 2.6 |
| | | benzene | wt% | 0.5 | 0.6 | 0.8 | 2.5 |
| | | toluene | wt% | 0 | 0 | 0.1 | 0.5 |
| | | xylene | wt% | 0 | 0 | 0 | 0 |
| | ethylbenzene | | wt% | 0 | 0 | 0 | 0.2 |
| 1.5-cyclic aromatic hydrocarbon | | | wt% | 38.0 | 35.6 | 30.8 | 21.6 |
| | tetralin | | wt% | 37.3 | 34.4 | 28.5 | 17.0 |
| | others | | wt% | 0.7 | 1.2 | 2.3 | 4.6 |
| bicyclic aromatic hydrocarbon | | | wt% | 0 | 0 | 0 | 0.1 |
| tricyclic or higher aromatic hydrocarbon | | | wt% | 0 | 0 | 0 | 0 |
| saturated cyclic hydrocarbon | | | wt% | 2.7 | 3.1 | 2.6 | 1.6 |
| | C6∼C9 naphthene | | wt% | 0.2 | 0.4 | 0.6 | 0.9 |
| | decalin | | wt% | 2.5 | 2.7 | 2.0 | 0.7 |
| alkylbenzene / 1.5- or higher cyclic aromatic hydrocarbon conversion rate | | | - | 0.11 | 0.14 | 0.15 | 0.21 |

### Comparative Examples 13 to 16

A catalyst G was obtained in the same manner as the catalyst D, except for using ZSM-5 type zeolite ("Lot-080115" manufactured by N.E. Chemcat Corporation) having SiO₂/Al₂O₃ molar ratio of 30.3, specific surface area of 405 m²/g, and particle size of 0.05 µm). The properties of the catalyst G are shown in Table 5.
The feedstock oil was hydrocracked in the same manner as in Examples 5 to 8, except that the catalyst G was used instead of the catalyst D as shown in Table 9. The properties of the hydrocracked oil and the like are shown in Table 9.

**TABLE 9**

| | | | | Comparative Example 13 | Comparative Example 14 | Comparative Example 15 | Comparative Example 16 |
|---|---|---|---|---|---|---|---|
| hydrocracking catalyst | | | | catalyst G | catalyst G | catalyst G | catalyst G |
| reaction temperature | | | °C | 300 | 300 | 320 | 320 |
| reaction pressure | | | MPa | 3.0 | 3.0 | 3.0 | 3.0 |
| LHSV | | | h⁻¹ | 0.5 | 1.0 | 1.0 | 1.5 |
| hydrogen/feedstock | | | NL/L | 1365 | 1365 | 1365 | 1365 |
| reaction liquid yield | | | vol% | 40 | 64 | 40 | 57 |
| 1.5- or higher cyclic aromatic hydrocarbon conversion rate | | | % | 94.1 | 23.6 | 91.6 | 56.1 |
| alkylbenzene | | | wt% | 6.1 | 7.5 | 6.7 | 11.0 |
| | BTX | | wt% | 6.1 | 4.4 | 6.7 | 8.8 |
| | | benzene | wt% | 4.2 | 2.4 | 4.5 | 4.5 |
| | | toluene | wt% | 1.9 | 2.0 | 2.2 | 3.7 |
| | | xylene | wt% | 0 | 0 | 0 | 0.6 |
| | ethylbenzene | | wt% | 0 | 0 | 0 | 0. |
| 1.5-cyclic aromatic hydrocarbon | | | wt% | 2.6 | 33.6 | 3.7 | 19.3 |
| | tetralin | | wt% | 2.6 | 32.8 | 3.7 | 18.4 |
| | others | | wt% | 0 | 0.8 | 0 | 0.9 |
| bicyclic aromatic hydrocarbon | | | wt% | 0 | 0 | 0 | 0 |
| tricyclic or higher aromatic hydrocarbon | | | wt% | 0 | 0 | 0 | 0 |
| saturated cyclic hydrocarbon | | | wt% | 0 | 0 | 0 | 0 |
| | C6∼C9 naphthene | | wt% | 0 | 0 | 0 | 0 |
| | decalin | | wt% | 0 | 0 | 0 | 0 |
| alkylbenzene/ 1.5- or higher cyclic aromatic hydrocarbon conversion rate | | | - | 0.06 | 0.32 | 0.07 | 0.20 |

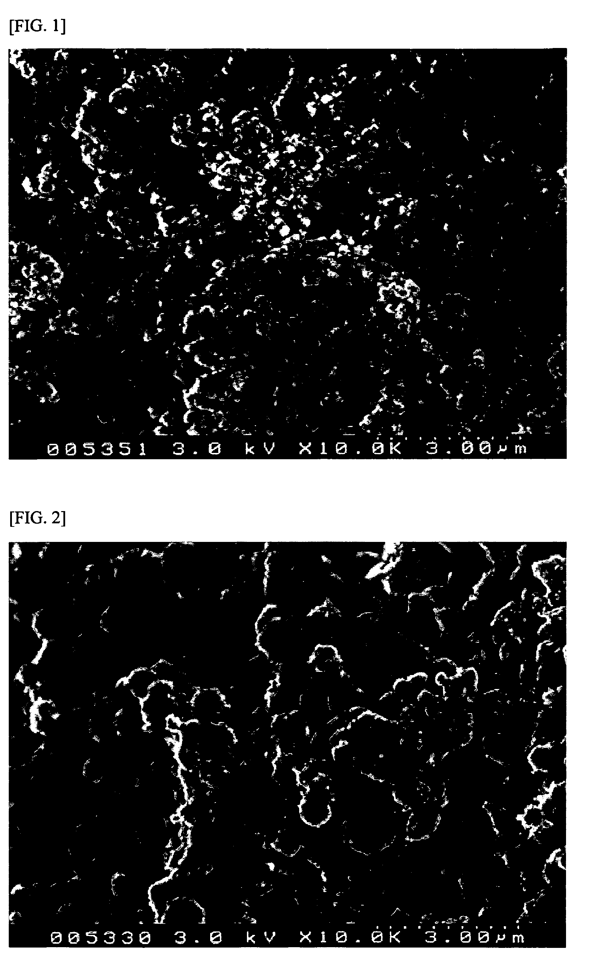

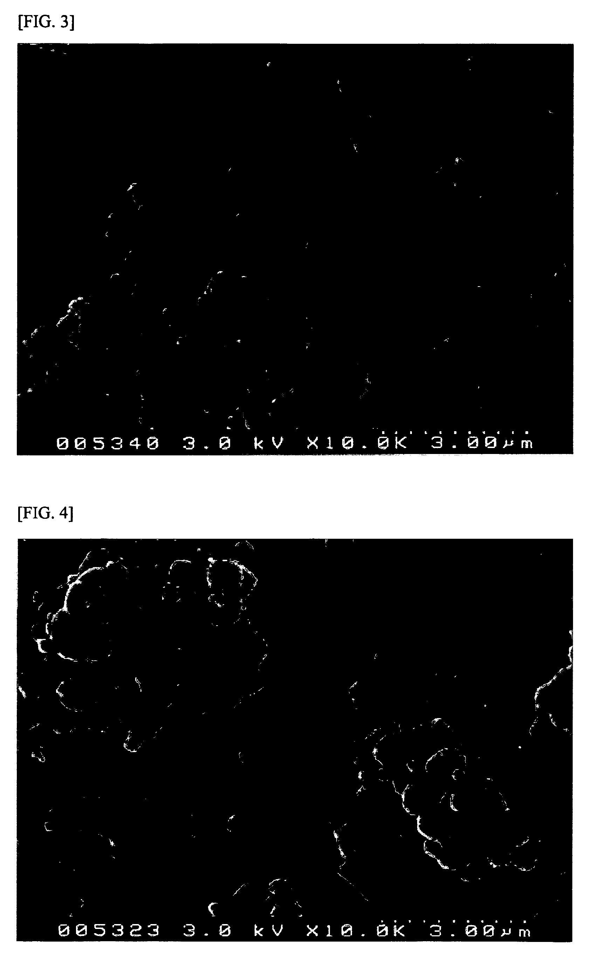

As shown in Tables 6 to 9, the 1.5-cyclic aromatic hydrocarbon was efficiently converted into the target alkylbenzene by hydrocracking the feedstock using a hydrocracking catalyst having an appropriate maximum acid strength as shown Examples 5 to 11. When using the hydrocracking catalyst that utilizes zeolite having a large particle size (Examples 9 to 11), the yield of the alkylbenzene decreased to some extent even if the maximum acid strength was the same. When using the hydrocracking catalyst that utilizes zeolite having a large particle size and a maximum acid strength outside the above range (Comparative Examples 9 to 12), a nuclear hydrogenation reaction proceeded, and the desired ring-opening reaction did not occur. As a result, the yield of the alkylbenzene decreased. When using the hydrocracking catalyst that utilizes zeolite having a maximum acid strength higher than the above range (Comparative Examples 13 to 16), the feedstock was hydrocracked to a large extent due to a strong acid center, and the target alkylbenzene could not be obtained due to a decrease in reaction liquid yield. Moreover, the catalyst was inactivated due to formation of coke, and the life of the catalyst decreased. In Comparative Example 14, a relatively large amount of alkylbenzene was produced with respect to the conversion rate of 1.5- or higher cyclic aromatic hydrocarbons. However, since the yield of the alkylbenzene was low, and the reaction liquid yield was also low (64 vol%) as compared with Example 6 or 10 in which an almost equal conversion rate was achieved, a large amount of undesirable gas was produced as a by-product.
As shown in FIGs 1 to 4 (SEM photograph), the particle size of the zeolite contained in the catalyst was almost the same as that of the zeolite raw material. The catalyst D used in Examples 5 to 8 was maintained in a microparticulate state.

### Examples 12 to 14

A light cycle oil fraction having properties shown in Table 10 as feedstock was hydrocracked at a reaction temperature shown in Table 11 under reaction pressure of 7.0 MPa, LHSV: 0.5 h⁻¹, and hydrogen/feedstock ratio of 1400 Nl/l using a first reactor charged with 25 ml of a commercially available hydrodesulfurization catalyst supporting Ni, Mo, and P (specific surface area: 185 m²/g, volume of pores having a pore diameter of 2 to 60 nm: 0.415 ml/g, central pore diameter: 7.9 nm, Mo: 12.3 wt%, Ni: 3.5 wt%, P: 2.0 wt%, Al: 43.3 wt%) and a second reactor charged with 50 ml of the catalyst D used in Examples 5 to 8.
The properties of the hydrodesulfurized oil obtained from the first reactor are shown in Table 10 (reaction temperature: 330 or 340°C), and the properties of the hydrocracked oil obtained from the second reactor are shown in Table 11. The 1.5- or higher cyclic aromatic hydrocarbon conversion rate is calculated by the following expression.
1.5- or higher cyclic aromatic hydrocarbon conversion rate (%) = 100 - (1.5- or higher cyclic aromatic hydrocarbon content (vol%) in hydrocracked oil / 1.5- or higher cyclic aromatic hydrocarbon content (vol%) in feedstock) × 100
However, since a light cycle oil contains a bicyclic aromatic hydrocarbon and a tricyclic aromatic hydrocarbon, the amount of 1.5-cyclic aromatic hydrocarbon may apparently increase depending on the hydrodesulfurization conditions. Therefore, the 1.5- or higher cyclic aromatic hydrocarbon conversion rate refers to an apparent 1.5- or higher cyclic aromatic hydrocarbon conversion rate.

**TABLE 10**

| | | light cycle oil | Hydrodesulfurized oil (reaction temperature °C) | |
|---|---|---|---|---|
| | | | 330 | 340 |
| density g/ml@ 15°C | | 0.9225 | 0.8947 | 0.8900 |
| sulfur content wtppm | | 1427 | 162 | 126 |
| nitrogen content wtppm | | 296 | <0.5 | <0.5 |
| kinematic viscosity mm²/s@30°C | | 3.298 | 3.272 | 2.947 |
| bromine number g=Br₂/100g | | 4.7 | <0.1 | <0.1 |
| basic nitrogen content wtppm | | 42 | <0.5 | <0.5 |
| distillation characteristics vol%-°C | | | | |
| | IBP | 156.0 | 122.5 | 116.5 |
| | 5 | 222.0 | 190.5 | 185.5 |
| | 10 | 234.5 | 208.5 | 201.0 |
| | 30 | 258.0 | 236.0 | 231.5 |
| | 50 | 275.0 | 260.5 | 255.0 |
| | 60 | 285.0 | 273.5 | 268.5 |
| | 80 | 309.5 | 303.0 | 298.0 |
| | 90 | 324.5 | 325.0 | 319.0 |
| | 95 | 335.5 | 343.0 | 338.5 |
| | 97 | 342.5 | 353.5 | 348.5 |
| | EP | 346.5 | 375.0 | 371.5 |
| composition vol% | | | | |
| | alkylbenzene | 10.1 | 11.4 | 9.3 |
| | 1.5-cyclic aromatic hydrocarbon | 12.4 | 43.2 | 43.8 |
| | bicyclic aromatic hydrocarbon | 38.8 | 5.6 | 5.0 |
| | tricyclic or higher cyclic aromatic hydrocarbon | 9.8 | 0.6 | 0.8 |
| | total aromatic hydrocarbon content | 71.1 | 60.8 | 55.9 |
| | saturated hydrocarbon | 26.0 | 38.8 | 41.1 |
| | olefin | 2.9 | 0.4 | 0 |

### Examples 15 to 17

The feedstockwas hydrocracked in the same manner as in Examples 12 to 14, except that the catalyst E used in Examples 9 to 11 was used instead of the catalyst D. The properties of the hydrocracked oil are shown in Table 11.

### Comparative Example 17

The feedstock was hydrocracked in the same manner as in Example 13, except that the catalyst F used in Comparative Examples 9 to 12 was used instead of the catalyst D. The properties of the hydrocracked oil are shown in Table 11.

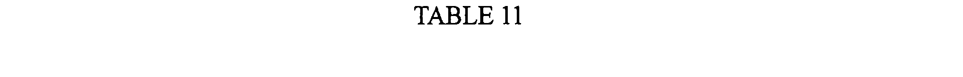

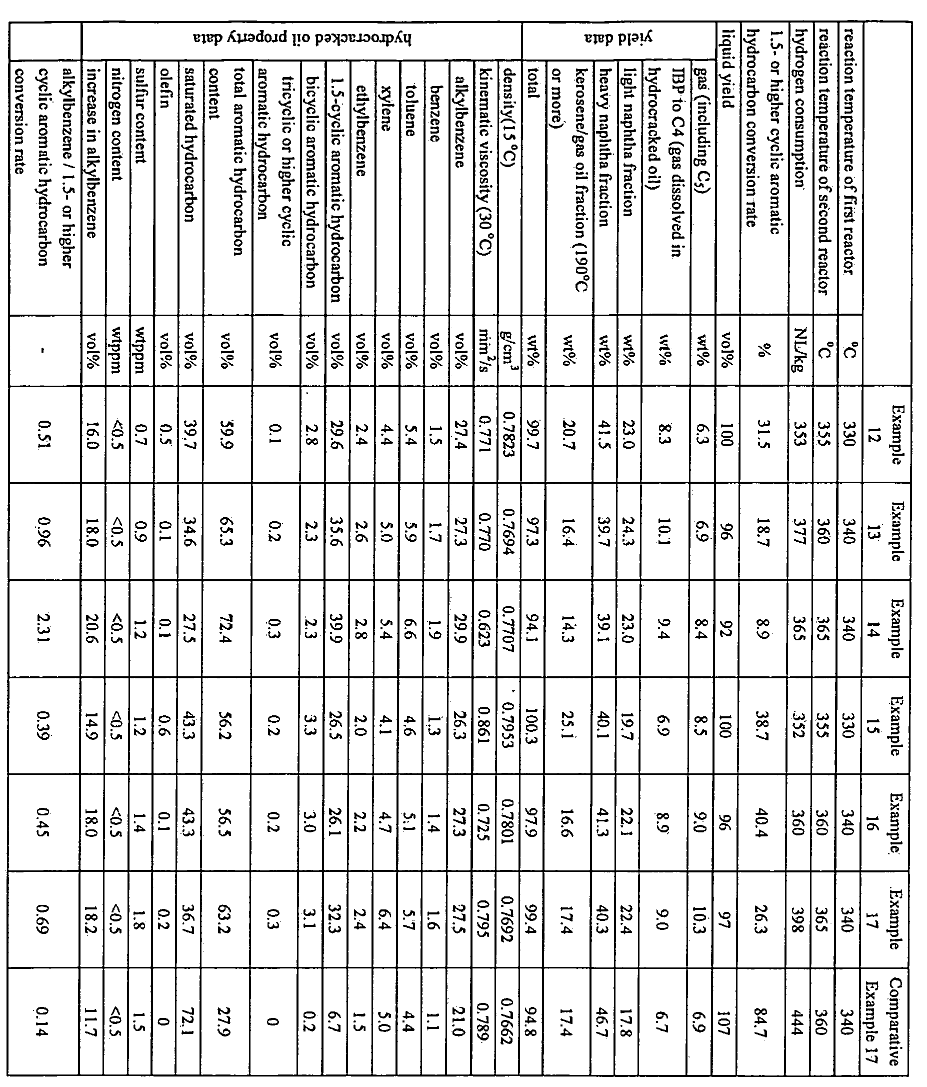

As shown in Table 11, the feedstock oil obtained by hydrodesulfurizing a light oil fraction to have the composition range according to the present invention was efficiently converted into an alkylbenzene by hydrocracking the feedstock using the hydrocracking catalyst that utilizes a solid acid having an appropriate maximum acid strength and an appropriate particle size. When using the hydrocracking catalyst that utilizes a solid acid having an appropriate maximum acid strength, but a large particle size (Examples 15 to 17), the amount of alkylbenzene produced decreased to some extent. When employing severe reaction conditions in order to improve the hydrocracking activity, the yield of the alkylbenzene was improved. However, the amount of produced gas increased due to excessive hydrocracking reactions, and the reaction liquid yield decreased. When using the hydrocracking catalyst that utilizes zeolite having a large particle size and an inappropriate maximum acid strength (Comparative Example 17), a nuclear hydrogenation reaction proceeded, and the desired ring-opening reaction did not occur. As a result, the yield of the alkylbenzene decreased.

### INDUSTRIAL APPLICABILITY

The present invention may be applied to a method that efficiently produces an alkylbenzene, particularly BTX (benzene, toluene, and xylene) with a high added value by appropriately hydrocracking an excess polycyclic aromatic hydrocarbon as a hydrocarbon oil feedstock without causing unnecessary nuclear hydrogenation. The resulting hydrocracked oil may be appropriately separated by the separation step into products such as an LPG fraction, a gasoline fraction, a kerosene fraction, a gas oil fraction, a non-aromatic naphtha fraction, and an alkylbenzene (including BTX).
These products may be used directly as LPG, gasoline, kerosene, gas oil, or a petrochemical raw material as long as the quality specification of the petroleum product and the like are satisfied, or may be blended and refined as a base material.

## Claims

1. A method of producing an alkylbenzene comprising causing a hydrocarbon oil feedstock containing an alkylbenzene content of less than 20 vol%, a bicyclic aromatic hydrocarbon content of less than 30 vol%, and a 1.5-cyclic aromatic hydrocarbon content of 25 vol% or more to come in contact with a hydrocracking catalyst that includes a solid acid having a maximum acid strength of Brönsted acid of 110 kJ/mol or more and less than 140 kJ/mol.

2. The method according to claim 1, wherein the solid acid is β zeolite particles having an average particle size of less than 0.7 µm.

3. The method according to claim 2, wherein the β zeolite particles included in the hydrocracking catalyst have an average crystallite diameter of 50 nm or less.

4. The method according to any one of claims 1 to 3, wherein the hydrocarbon oil feedstock is a fraction obtained by hydrogenating a hydrocarbon oil feedstock containing a bicyclic aromatic hydrocarbon content of 30 vol% or more so that the bicyclic aromatic hydrocarbon content is reduced to less than 30 vol%.

5. A hydrocracking catalyst comprising a solid acid having a maximum acid strength of Brönsted acid of 110 kJ/mol or more and less than 140 kJ/mol and being used for the method according to any one of claims 1 to 4.

6. The hydrocracking catalyst according to claim 5, wherein the solid acid is β zeolite particles having an average particle size of less than 0.7 µm and an average crystallite diameter of 50 nm or less.
